# EUROPEAN PATENT APPLICATION

(11) **EP 4 851 799 A1**
(43) Date of publication of application: **09.12.2026**
(21) Application number: 26181284.6
(22) Date of filing: 27.05.2026
(51) Int. Cl.: G06F 9/48, G06F 9/50

(54) **WORKLOAD MIGRATION ACROSS COMPUTING ENVIRONMENTS USING MACHINE LEARNING AND WORKLOAD GROUPING**

(30) Priority: 06.06.2025 US 202519231093
(71) Applicant: VMware LLC, Palo Alto, CA 94304 (US)
(72) Inventor: Jain, Prashant, 302019 Jaipur (IN); Rajpal, Harsh, 282005 Agra (IN)
(74) Representative: Bosch Jehle Patentanwaltsgesellschaft mbH

(57) **Abstract**

A computer system is configured to migrate a plurality of workloads by performing the steps of: collecting network traffic data associated with network traffic flows between pairs of workloads within the plurality of workloads; generating a first graph data structure including a plurality of first nodes corresponding respectively to at least a first subset of the plurality of workloads, and further including edges connecting pairs of first nodes within the plurality of first nodes; assigning weights to the edges of the first graph data structure based at least on the network traffic data; executing a neural network to divide the first graph data structure into a plurality of first subgraph data structures; and transferring the first subset of the plurality of workloads from a first computing environment to a second computing environment in a plurality of first batches according to the first subgraph data structures.

## Description

Organizations today deploy software solutions such as web application servers and data processing pipelines, referred to herein as "workloads," across various computing environments. These computing environments may include on-premises setups, private clouds, and public clouds. Workloads deployed on-premises are provisioned within an organization's own information technology (IT) infrastructure, often within a dedicated on-premises data center. Workloads deployed in a private cloud are provisioned in a private data center controlled and operated by the organization. Workloads deployed in a public cloud are provisioned in a public data center, where workloads from different organizations share the same infrastructure.

Furthermore, organizations frequently deploy workloads across multiple geographical regions and within hybrid cloud environments. A hybrid cloud combines workloads running across a combination of computing environments, such as on-premises setups, private clouds, and public clouds. Given the prevalence of hybrid cloud environments, there is often a need to migrate workloads between computing environments. Workloads are migrated for a variety of reasons, such as load balancing across computing environments in different regions, consolidating workloads within computing environments, moving workloads closer to users, among other reasons. Unfortunately, migrating workloads can present scalability challenges. For instance, when workloads run across large numbers of virtual machines (VMs), migrating those VMs can consume significant bandwidth and result in considerable downtime for the workloads. Given such challenges, a method is desired for migrating workloads between computing environments in a manner that minimizes disruption to their execution.

One or more embodiments provide computer system including one or more computers that include one or more processors and memory. The one or more processors execute instructions stored in the memory to migrate a plurality of workloads from a first computing environment to a second computing environment. By executing such instructions, the computer system performs the steps of: collecting network traffic data associated with network traffic flows between pairs of workloads within the plurality of workloads; generating a first graph data structure including a plurality of first nodes corresponding respectively to at least a first subset of the plurality of workloads, and further including edges connecting pairs of first nodes within the plurality of first nodes; assigning weights to the edges of the first graph data structure based at least on the network traffic data; executing a neural network to divide the first graph data structure into a plurality of first subgraph data structures, the neural network generating the first subgraph data structures based at least on the weights assigned to the edges of the first graph data structure; and transferring the first subset of the plurality of workloads from the first computing environment to the second computing environment in a plurality of first batches according to the first subgraph data structures. Workloads transferred in each of the first batches correspond to first nodes of one of the first subgraph data structures.

Further embodiments include a method comprising the above steps and one or more non-transitory computer-readable media comprising instructions that cause a computer system to carry out the above steps.

According to an aspect, a computer system is provided including one or more computers that include one or more processors and memory, wherein the one or more processors execute instructions stored in the memory to migrate a plurality of workloads from a first computing environment to a second computing environment, by performing the following steps:
collecting network traffic data associated with network traffic flows between pairs of workloads within the plurality of workloads;
generating a first graph data structure including a plurality of first nodes corresponding respectively to at least a first subset of the plurality of workloads, and further including edges connecting pairs of first nodes within the plurality of first nodes;
assigning weights to the edges of the first graph data structure based at least on the network traffic data;
executing a neural network to divide the first graph data structure into a plurality of first subgraph data structures, the neural network generating the first subgraph data structures based at least on the weights assigned to the edges of the first graph data structure; and
transferring the first subset of the plurality of workloads from the first computing environment to the second computing environment in a plurality of first batches according to the first subgraph data structures, workloads transferred in each of the first batches corresponding respectively to first nodes of one of the first subgraph data structures.

Advantageously, the steps further comprise:
generating a second graph data structure including a plurality of second nodes corresponding respectively to a second subset of the plurality of workloads, and further including edges connecting pairs of second nodes within the plurality of second nodes, and assigning weights to the edges of the second graph data structure based at least on the network traffic data;
executing the neural network to divide the second graph data structure into a plurality of second subgraph data structures, the neural network generating the second subgraph data structures based at least on the weights assigned to the edges of the second graph data structure; and
transferring the second subset of the plurality of workloads from the first computing environment to the second computing environment in a plurality of second batches according to the second subgraph data structures, workloads transferred in each of the second batches corresponding respectively to second nodes of one of the second subgraph data structures.

Advantageously, dividing the first graph data structure into the plurality of first subgraph data structures comprises:
executing the neural network a plurality of times, the first graph data structure being input to the neural network during a first iteration of the neural network, the neural network generating a plurality of output subgraph data structures based on the first graph data structure, and one of the output subgraph data structures being input to the neural network during a second iteration of the neural network.

Advantageously, the steps further comprise:
determining that the one of the output subgraph data structures includes a number of nodes that exceeds a predetermined maximum size for the first batches.

Advantageously, the steps further comprise:
determining, based on the network traffic data, measures of network traffic between the pairs of workloads within the plurality of workloads, the weights of the first graph data structure being assigned based on the measures of network traffic.

Advantageously, applications are executed by the plurality of workloads, and the steps further comprise:
collecting application data associating workloads within the plurality of workloads with the plurality of applications, the weights being assigned to the edges of the first graph data structure further based on the application data.

Advantageously, transferring the plurality of workloads comprises transferring workloads that are in the same ones of the first batches in parallel.

According to an aspect, a method of migrating a plurality of workloads from a first computing environment to a second computing environment is provided, the method comprising:
collecting network traffic data associated with network traffic flows between pairs of workloads within the plurality of workloads;
generating a first graph data structure including a plurality of first nodes corresponding respectively to at least a first subset of the plurality of workloads, and further including edges connecting pairs of first nodes within the plurality of first nodes;
assigning weights to the edges of the first graph data structure based at least on the network traffic data;
executing a neural network to divide the first graph data structure into a plurality of first subgraph data structures, wherein the neural network generates the first subgraph data structures based at least on the weights assigned to the edges of the first graph data structure; and
transferring the first subset of the plurality of workloads from the first computing environment to the second computing environment in a plurality of first batches according to the first subgraph data structures, wherein workloads transferred in each of the first batches correspond respectively to first nodes of one of the first subgraph data structures.

Advantageously, the method further comprises:
generating a second graph data structure including a plurality of second nodes corresponding respectively to a second subset of the plurality of workloads, and further including edges connecting pairs of second nodes within the plurality of second nodes, and assigning weights to the edges of the second graph data structure based at least on the network traffic data;
executing the neural network to divide the second graph data structure into a plurality of second subgraph data structures, wherein the neural network generates the second subgraph data structures based at least on the weights assigned to the edges of the second graph data structure; and
transferring the second subset of the plurality of workloads from the first computing environment to the second computing environment in a plurality of second batches according to the second subgraph data structures, wherein workloads transferred in each of the second batches correspond respectively to second nodes of one of the second subgraph data structures.

Advantageously, dividing the first graph data structure into the plurality of first subgraph data structures comprises:
executing the neural network a plurality of times, the first graph data structure being input to the neural network during a first iteration of the neural network, the neural network generating a plurality of output subgraph data structures based on the first graph data structure, and one of the output subgraph data structures being input to the neural network during a second iteration of the neural network.

Advantageously, the method further comprises:
determining that the one of the output subgraph data structures includes a number of nodes that exceeds a predetermined maximum size for the first batches.

Advantageously, the method further comprises:
determining, based on the network traffic data, measures of network traffic between the pairs of workloads within the plurality of workloads, the weights of the first graph data structure being assigned based on the measures of network traffic.

Advantageously, applications are executed by the plurality of workloads, and the method further comprises:
collecting application data associating workloads within the plurality of workloads with the plurality of applications, the weights being assigned to the edges of the first graph data structure further based on the application data.

Advantageously, transferring the plurality of workloads comprises transferring workloads that are in the same ones of the first batches in parallel.

According to an aspect, one or more non-transitory, computer-readable media comprising instructions that are executable in a computer system are provided, wherein the instructions when executed cause the computer system to carry out a method of migrating a plurality of workloads from a first computing environment to a second computing environment, and wherein the method comprises:
collecting network traffic data associated with network traffic flows between pairs of workloads within the plurality of workloads;
generating a first graph data structure including a plurality of first nodes corresponding respectively to at least a first subset of the plurality of workloads, and further including edges connecting pairs of first nodes within the plurality of first nodes;
assigning weights to the edges of the first graph data structure based at least on the network traffic data;
executing a neural network to divide the first graph data structure into a plurality of first subgraph data structures, the neural network generating the first subgraph data structures based at least on the weights assigned to the edges of the first graph data structure; and
transferring the first subset of the plurality of workloads from the first computing environment to the second computing environment in a plurality of first batches according to the first subgraph data structures, workloads transferred in each of the first batches corresponding respectively to first nodes of one of the first subgraph data structures.

Advantageously, the method further comprises:
generating a second graph data structure including a plurality of second nodes corresponding respectively to a second subset of the plurality of workloads, and further including edges connecting pairs of second nodes within the plurality of second nodes;
assigning weights to the edges of the second graph data structure based at least on the network traffic data;
executing the neural network to divide the second graph data structure into a plurality of second subgraph data structures, the neural network generating the second subgraph data structures based at least on the weights assigned to the edges of the second graph data structure; and
transferring the second subset of the plurality of workloads from the first computing environment to the second computing environment in a plurality of second batches according to the second subgraph data structures, workloads transferred in each of the second batches corresponding respectively to second nodes of one of the second subgraph data structures.

Advantageously, dividing the first graph data structure into the plurality of first subgraph data structures comprises:
executing the neural network a plurality of times, the first graph data structure being input to the neural network during a first iteration of the neural network, the neural network generating a plurality of output subgraph data structures based on the first graph data structure, and one of the output subgraph data structures being input to the neural network during a second iteration of the neural network.

Advantageously, the method further comprises:
determining that the one of the output subgraph data structures includes a number of nodes that exceeds a predetermined maximum size for the first batches.

Advantageously, the method further comprises:
determining, based on the network traffic data, measures of network traffic between the pairs of workloads within the plurality of workloads, the weights of the first graph data structure being assigned based on the measures of network traffic.

Advantageously, applications are executed by the plurality of workloads, and the method further comprises:
collecting application data associating workloads within the plurality of workloads with the plurality of applications, the weights being assigned to the edges of the first graph data structure further based on the application data.

### Brief Description of the Drawings

Figure 1 is a block diagram of a computing environment in which embodiments may be implemented.
Figure 2 is a block diagram of a plurality of computing environments in which embodiments may be implemented.
Figure 3A is an example of a plurality of graph data structures that may be generated, according to embodiments.
Figure 3B is an example of a plurality of subgraph data structures that may be generated from a graph data structure, according to embodiments.
Figure 4 is a flow diagram of a method that may be performed by a computer system to transfer workloads across computing environments, according to some embodiments.
Figure 5 is a flow diagram of a method that may be performed by a host to execute a neural network to divide graphs into subgraphs, according to some embodiments.

### Detailed Description .

Techniques are described for migrating workloads between computing environments in a manner that minimizes disruption to the workloads. As used herein, a "computing environment" refers to a collection of hardware, software, networks, and resources within which computing tasks are executed and managed. Examples of computing environments include on-premises setups, private clouds, and public clouds. For example, the workloads being migrated may be executed across VMs within such computing environments. For example, such VMs may be migrated from a public cloud to an on-premises setup, from one public cloud to another public cloud, from a private cloud to a public cloud, etc.

Data may be collected about workloads to determine how closely connected they are. For example, network traffic data may be collected that indicates amounts of communication between VMs. Using such data, one or more graph data structures, referred to herein simply as "graphs," may be constructed. A data structure is a specialized format for organizing, storing, and managing data in a computer so that it can be accessed and modified efficiently. A graph is a type of data structure comprising a set of nodes, also referred to as vertices, and a set of edges that define relationships or connections between pairs of nodes. According to some embodiments, each node of a graph may correspond to a VM, and each edge may be assigned a weight. As used herein, a weight is a numerical value assigned to an edge of a graph, representing a closeness between a pair of VMs, i.e., a strength or significance of an edge therebetween.

Once one or more graphs are constructed, the graph(s) may be divided into a plurality of subgraph data structures, referred to herein simply as "subgraphs." A subgraph is a subset of an original graph that includes a selection of nodes and edges from the graph, preserving the connectivity and structure of the included nodes and edges as defined in the original graph. Dividing the graph(s) into subgraphs allows for separating nodes (and thus VMs) into small enough groups such that each group may be migrated across computing environments in a single batch. As used herein, a batch of VMs is a group of VMs that are migrated together in one operation. For example, VMs in a batch may be migrated between computing environments in parallel, which means that they are transferred simultaneously instead of sequentially,

It should be noted that resource constraints limit the sizes of batches. For example, the larger a batch is, the more bandwidth is needed between computing environments to transfer data of VMs such as memory and disk data. As another example, the larger a batch is, the more processing and memory resources are required by host computers, referred to herein simply as "hosts," to perform the migration. Accordingly, sizes of batches are limited by resource constraints such as network bandwidth available between computing environments and processing and memory resources available in the hosts.

Given the above resource constraints, it may be necessary to divide VMs into many different batches. Accordingly, an original graph(s) may be divided into many subgraphs, each subgraph corresponding to a batch. Machine learning (ML) may be applied for such task, and such dividing may be based at least on the weights that are assigned to the edges. The ML may thus divide the graph(s) in such a manner that minimizes the separation of closely connected nodes (and thus VMs) into separate groups.

By dividing VMs into batches based at least on weights, techniques are able to minimize disruptions to executing workloads. For example, if two VMs communicate extensively, those VMs may be migrated in the same batch and even in parallel such that there is no time in which the two VMs are executing in separate computing environments. It is desirable to avoid such situation because the two VMs may communicate more efficiently while executing in the same computing environment, where the VMs benefit from proximity and shared network infrastructure for faster, more reliable communication. These and further aspects of the invention are discussed below with respect to the drawings.

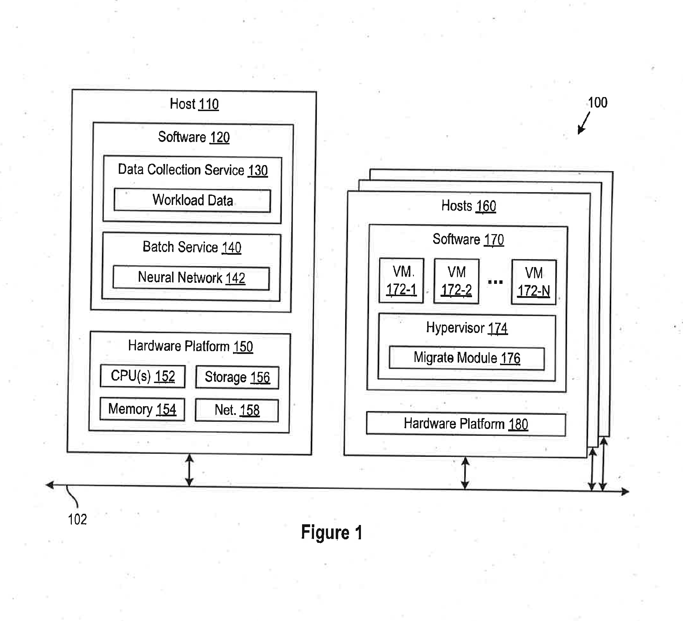

Figure 1 is a block diagram of a computing environment 100 in which embodiments may be implemented. For example, computing environment 100 may be an on-premises setup within an organization's IT infrastructure, a private cloud provisioned in a private data center of the organization, or a public cloud utilized by the organization. In the example of Figure 1, computing environment 100 includes a computer system with a host 110 and hosts 160.

Host 110 is constructed on a hardware platform 150 such as an x86 architecture platform. Hardware platform 150 includes components of a computer, such as one or more central processing units (CPUs) 152, memory 154 such as random-access memory (RAM), local storage 156 such as one or more magnetic drives or solid-state drives (SSDs), and networking hardware 158 such as one or more network interface controllers (NICs). CPU(s) 152 are configured to execute instructions such as executable instructions that perform one or more operations described herein, which may be stored in memory 154. Using networking hardware 158, host 110 may communicate with other devices over a network 102 such as a local area network (LAN), along with other networks.

Hardware platform 150 supports software 120. Software 120 includes a data collection service 130 and a batch service 140. Data collection service 130 is software configured to collect data about workloads executing in the computer system of computing environment 100, referred to herein as "workload data." For example, data collection service 130 may collect the workload data over time periods such as 30 days by monitoring hosts 160 or by requesting the workload data from a separate monitoring service of the computer system. Batch service 140 is software configured to divide the workloads into a plurality of batches based on the workload data. Batch service 140 includes a neural network 142 for dividing the workloads in a manner that minimizes disruption to the workloads. For example, data collection service 130 and batch service 140 may execute in respective VMs.

Artificial neural networks, referred to herein simply as "neural networks," are ML models consisting of interconnected layers of nodes, referred to as "neurons." A "neuron" is a fundamental unit or component of a neural network. Neurons in a neural network work together to process input data, transform it through layers of computation, and produce an output. According to embodiments, neural network 142 is trained to partition a graph input thereto, into a plurality of subgraphs. For example, neural network 142 may be trained to partition a graph using a clustering algorithm or a community detection algorithm. Clustering algorithms that could be used by neural network 142 include K-means clustering, spectral clustering, and others. These clustering algorithms group nodes based on proximity, which may be indicated by the weights of edges. On the other hand, community detection algorithms such as the weighted Louvain method, weighted Girvan-Newman algorithm, and others may be used by neural network 142. These community detection algorithms identify tightly-knit communities of nodes, typically based on edge weights and the density of connections between nodes.

Hosts 160 are each constructed on a respective hardware platform 180 such as an x86 architecture platform. Similar to hardware platform 150, hardware platform 180 includes components of a computer (not shown), such as one or more CPUs, memory such as RAM, local storage such as one or more magnetic drives or SSDs, and networking hardware such as one or more NICs. The CPU(s) are configured to execute instructions such as executable instructions that perform one or more operations described herein, which may be stored in the memory. Using respective networking hardware, hosts 160 may communicate with each other and with other devices over networks such as network 102.

On each of hosts 160, hardware platform 180 supports respective software 170. Software 170 may include a hypervisor 174, which is a software layer or component that supports the execution of multiple VMs 172. One example of hypervisor 174 is a VMware ESX^{®} hypervisor, available from VMware LLC. A VM is a software emulation of a host including its own guest operating system (OS) that may support one or more workloads. VMs share the hardware resources of the hosts on which they execute, including the processing, memory, storage, and networking resources. A VM is an example of a virtualized computing instance, which is an addressable data compute node (DCN) or isolated user space instance. Although the disclosure is described with reference to VMs, the teachings herein also apply to other types of virtualized computing instances executing workloads such as containers.

Hypervisor 174 includes a migrate module 176, which is software that is configured to manage the migration of VMs. For example, on one of hosts 160, the local instance of migrate module 176 may act as a migration source, performing migration-related operations to support the migration of one of VMs 172 to another one of hosts 160 or to a host in a computing environment outside computing environment 100. On the other hand, the local instance of migrate module 176 may act as a migration destination, performing migration-related operations to support the migration of one of VMs 172 from another one of hosts 160 or of a VM from a host in a computing environment outside computing environment 100.

It should be noted that embodiments are not limited to the boundaries between components illustrated in Figure 1 or to the locations thereof. For example, although data collection service 130 and batch service 140 are illustrated as separate components executing together on host 110, these services may be combined or may execute on separate hosts. As another example, although data collection service 130 and batch service 140 are illustrated as executing separately from VMs 172 executing on hosts 160, these services may instead execute on the same or separate ones of hosts 160.

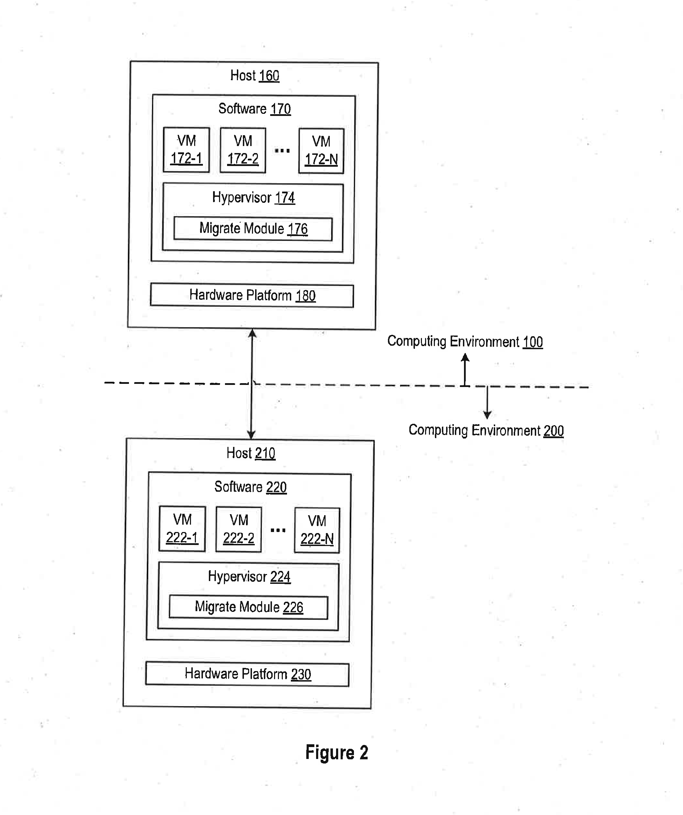

Figure 2 is a block diagram of a plurality of computing environments in which embodiments may be implemented. Items of Figure 2 that are the same or similar to items of Figure 1 include the same reference numbers and will not be explained again. Figure 2 illustrates two computing environments: computing environment 100 and a separate computing environment 200. Computing environments 100 and 200 may be part of an organization's hybrid cloud environment. For example, computing environments 100 and 200 may be a public cloud and an on-premises setup, respectively. As another example, computing environments 100 and 200 may be a public cloud and a private cloud, respectively.

Computing environment 200 includes a host 210, which is constructed on a hardware platform 230 such as an x86 architecture platform. Similar to hardware platform 150 discussed above, hardware platform 230 includes components of a computer (not shown), such as one or more CPUs, memory such as RAM, local storage such as one or more magnetic drives or SSDs, and networking hardware such as one or more NICs. The CPU(s) are configured to execute instructions such as executable instructions that perform one or more operations described herein, which may be stored in the memory. Using the networking hardware, host 210 may communicate with other devices such as hosts 160 over networks including the Internet (only one of hosts 160 being illustrated in Figure 2 for simplicity).

Hardware platform 230 supports software 220.. Software 220 may include a hypervisor 224, which supports the execution of multiple VMs 222. For instance, an organization may determine to migrate VMs 222 from computing environment 200 to computing environment 100 to resume execution on hosts 160. In other instances, the organization may determine to migrate VMs 172 from computing environment 100 to computing environment 200 to resume execution on host 210 (or on other hosts of computing environment 200).

It should be noted that various forms of VM migration may be performed in accordance with embodiments. For example, in a process known as live migration, VMs may continue running while their memory is transferred between hosts, with the final CPU state synchronized rapidly at the end. For each VM, live migration typically involves multiple phases of pre-copying, during which memory is iteratively transferred even as the VM continues running . and modifying memory. In another type of migration, known as storage migration, entire disks of VMs are transferred between storage systems used by hosts. A virtual disk is a file or set of files . that reproduce the function of a storage device such as a magnetic drive or SSD. Some migration processes, such as storage migrations, may require powering off VMs prior to transferring them between hosts, which is referred to as cold migration.

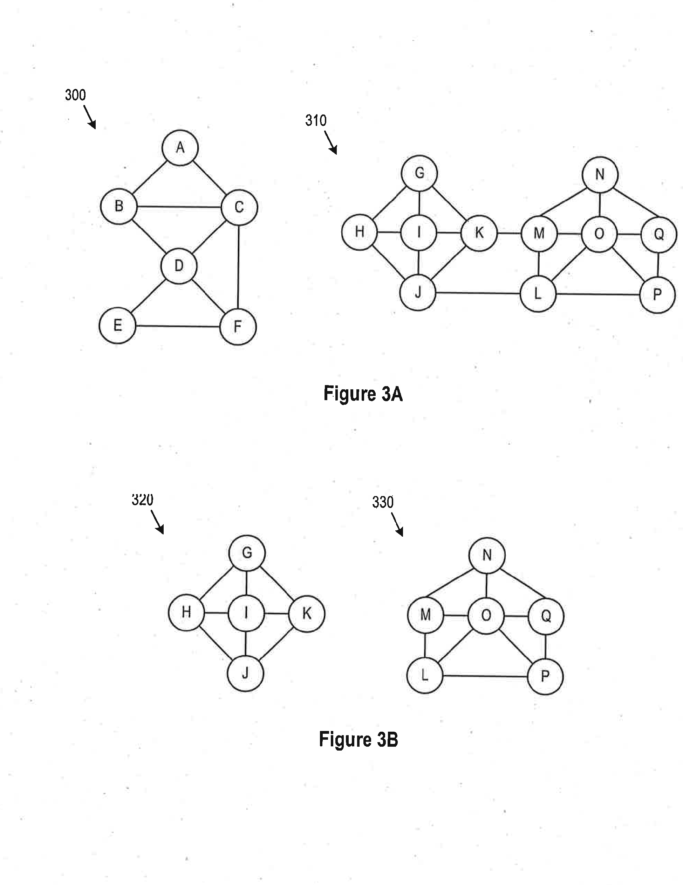

Figure 3A is an example of a plurality of graphs 300 and 310 that may be generated, according to embodiments. Batch service 140 may generate graphs 300 and 310 based on the workload data collected by data collection service 130. Graph 300 includes nodes A-F, which may correspond to 6 of VMs 172. Graph 300 further includes edges connecting pairs of nodes, including an edge connecting node A to node B, an edge connecting node A to node C, etc. Graph 310 includes nodes G-Q, which may correspond to 11 others of VMs 172. Graph 310 further includes edges connected pairs of nodes, including an edge connecting node G to node H, an edge connecting node G to node I, etc.

Weights may be assigned to edges of graphs 300 and 310 based on a variety of factors. As one example, the workload data may include network traffic data. Network traffic data refers to information characterizing communications over a network such as network 102, including metadata and content associated with network traffic flows. Network traffic data may include, for example, source and destination internet protocol (IP) addresses, port numbers, protocol types, packet sizes, timestamps, and flow durations, as well as higher-level information such as domain names and application-layer payloads. A network traffic flow is a sequence of network packets transmitted from a source to a destination, e.g., between VMs.

Batch service 140 may increase the weight of an edge as the amount of network traffic between a pair of VMs 172 increases. Conversely, batch service 140 may decrease the weight of an edge as the amount of network traffic between a pair of VMs 172 decreases. For example, such amounts of network traffic may be based on various measures of network traffic, including volumes of network traffic (e.g., in total numbers of bytes), frequencies of network traffic (e.g., in numbers of separate network traffic flows), etc.

As another example, the workload data may include application data associating VMs 172 with a plurality of applications executed by the workloads. Batch service 140 may increase the weight of an edge if the application data indicates that the same application is being executed on a pair of VMs 172. Conversely, batch service 140 may decrease the weight of an edge if the application data indicates that different applications are being executed on a pair of VMs 172. For example, two or more of VMs 172 may execute different portions of the same distributed application. A distributed application is a software system in which different components, located on separate networked computing resources such as VMs, communicate and cooperate to perform a unified set of functions. For example, a distributed application may include one VM that executes the application's business logic, referred to as a "processing tier," and another VM that hosts a relational database for storing and retrieving application data, referred to as a "database tier."

As another example, the workload data may include configuration data identifying the technical setup of VMs 172. As just a few examples, the configuration data for each of VMs 172 may include a number of virtual CPUs (vCPUs) (e.g., 4 vCPUs), an amount of memory (e.g., 16 GB of RAM), virtual disk specifications (e.g., a 500-GB, thin-provisioned virtual disk), network interfaces and policies (e.g., 2 virtual NICs (vNICs), mapped to different virtual local area networks (VLANs) for traffic segmentation), and advanced settings (e.g., latency sensitivity settings). Batch service 140 may increase the weight of an edge if the configuration data indicates that a pair of VMs 172 include many of the same or similar configurations. Conversely, batch service 140 may decrease the weight of an edge if the configuration data indicates that the pair of VMs 172 include few or no common configurations.

As another example, the workload data may include tag data identifying tags that have been applied to VMs 172. As used herein, tags are high-level, human-readable metadata that may be assigned to VMs 172, providing key insights into aspects such as logical grouping and policy enforcement. For example, for each of VMs 172, tags may indicate the computing environment in which it operates (e.g., production or testing), as well as associated policy applications (e.g., a backup frequency such as hourly or daily). Batch service 140 may increase the weight of an edge if the tag data indicates that many of the same tags have been applied to the a pair of VMs 172. Conversely, batch service 140 may decrease the weight of an edge if the tag data indicates that few or none of the same tags have been applied to the pair of VMs 172.

It should be noted that batch service 140 may compute weights for the edges of graphs 300 and 310 based on a combination of the above factors. For example, for each of the edges, batch service 140 may compute a weighted average, e.g., using predetermined coefficients such as 40 for a total volume of network traffic between a pair of VMs 172, 10 for the number of separate traffic flows therebetween, 40 for whether the same application is being executed thereon, and 10 for an amount of the same tags that have been applied thereto. According to such example, batch service 140 may compute various weighted normalized values and sum the weighted normalized values to determine a final weight for an edge.

Following the above example, a first normalized value of an edge may be computed based on a volume of network traffic between a pair of VMs 172 (e.g., in bytes), a minimum volume between any two of VMs 172 in the computer system (e.g., in bytes), and a maximum volume between any two of VMs 172 in the computer system (e.g., in bytes). For example, following the below expression, over the previous 30 days, if the volume between the associated ones of VMs 172 is 55,000 bytes, the minimum is 10,000 bytes, and the maximum is 100,000 bytes, then the normalized value based on network traffic volume may be 0.5. $\frac{Flow Traffic - Min Flow Traffic}{Max Flow Traffic - Min Flow Traffic}$

Continuing the above example, a second normalized value of an edge may be computed based on a number of traffic flows between the pair of VMs 172, a minimum number of flows between any two of VMs 172 in the computer system, and a maximum number of flows between any two of VMs 172 in the computer system. For example, following the below expression, over the previous 30 days, if the number of flows between the associated ones of VMs 172 is 5 flows, the minimum number is 1 flow, and the maximum number is 11 flows, then the normalized value based on network traffic flow count may be 0.4. $\frac{Flow Count - Min Flow Count}{Max Flow Count - Min Flow Count}$

Continuing the above example, a third normalized value of an edge may be computed based on a number of common applications running on the pair of VMs 172 and a maximum number of applications running on any of VMs 172 in the computer system. For example, following the below expression, if the number of common applications running on the associated ones of VMs 172 is 1 application and the and maximum number is 1 application, then the normalized value based on common applications may be 1. $\frac{Common Applications}{Max Number of Applications}$

Continuing the above example, a fourth normalized value of an edge may be computed based on a number of the same tags applied to the pair of VMs 172 and a maximum number of tags applied to any of VMs 172. For example, following the below expression, if the number of common tags applied to the associated ones of VMs 172 is 2 tags and the maximum number is 5 tags, then the normalized value based on common tags may be 0.4. $\frac{Common Tags}{Max Number of Tags}$

Continuing the above example, the weight for an edge may computed as a weighted sum by combining the normalized values thereof with corresponding coefficients. For example, following the below expression, if the normalized values include 0.5, 0.4, 1, and 0.4 and the corresponding coefficients include 40, 10, 40, and 10, respectively, the weight for the edge may be 68. ${\sum }_{i = 0}^{3} {Value}_{i} ∗ {Coefficient}_{i}$

Figure 3B is an example of a plurality of subgraphs 320 and 330 that may be generated from graph 310, according to embodiments. In accordance with embodiments described above, neural network 142 may partition graph 310 based on its nodes, edges, and edge weights, into distinct subgraphs 320 and 330 via the removal of selected interconnecting edges. As discussed above, neural network 142 may partition graph 310 using a clustering algorithm or a community detection algorithm. In this example, two edges, including one connecting nodes K and M and another connecting nodes J and L, are removed to facilitate the division. The removal of these edges reflects an identification by neural network 142 of low-connectivity bridges between otherwise densely connected regions of graph 310. As a result, subgraph 320 includes nodes G-K and the edges therebetween, and subgraph 330 includes nodes L-Q and the edges therebetween.

For example, if neural network 142 utilizes a clustering algorithm such as spectral clustering, neural network 142 may segment graph 310 based on the edge weights. As another example, if neural network 142 utilizes a community detection algorithm such as the weighted Louvain method, neural network 142 may perform such partitioning based on the edge weights and densities of connections between nodes. In either case, neural network 142 may be trained to learn such partitioning strategies to output subgraphs that preserve intrinsic structural or functional grouping present in a graph or subgraph input thereto.

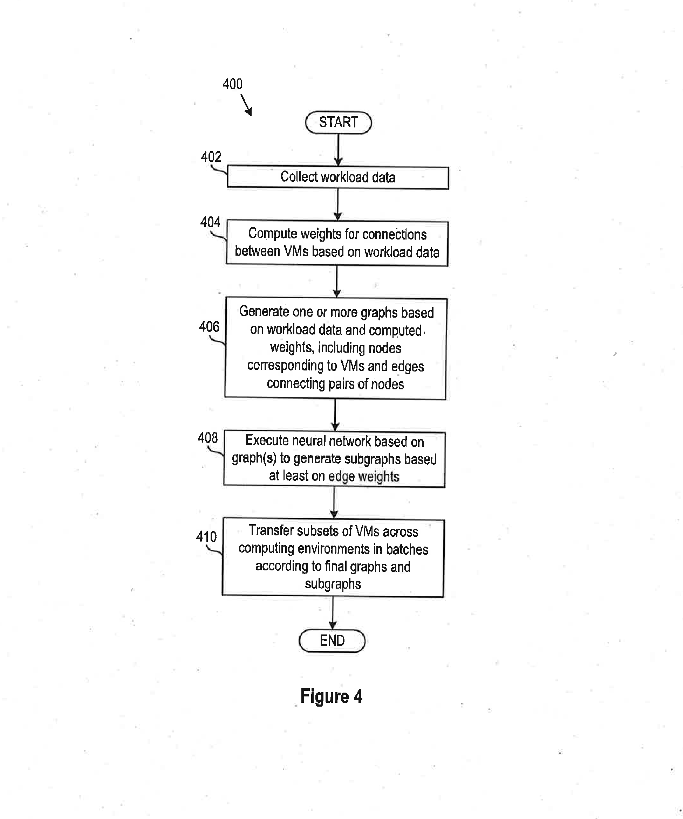

Figure 4 is a flow diagram of a method 400 that may be performed by the computer system of computing environment 100 to transfer workloads across computing environments, according to some embodiments. At step 402, data collection service 130 collects workload data for VMs 172. As discussed above, the collected workload data may include one or more of network traffic data, application data, configuration data, and tag data.

At step 404, batch service 140 computes weights for connections between VMs 172 based on the workload data. For example, as discussed above, batch service 140 may compute normalized values based on the collected workload data and then compute weighted averages based on the normalized values and corresponding coefficients. At step 406, batch service 140 generates one or more graphs based on the collected workload data and the computed weights, the graph(s) including nodes corresponding to VMs 172 and edges connecting pairs of nodes. Batch service 140 further assigns the computed weights to the edges as determined at step 404.

It should be noted that for some nodes, there may be 0 weight therebetween, e.g., because the associated ones of VMs 172 do not communicate, execute different applications, and do not have common configurations or tags. In such case, neural network 142 may include edges between such nodes in the graph(s) and assign a weight of 0 thereto. Instead, neural network 142 may determine not to include such edges at all.

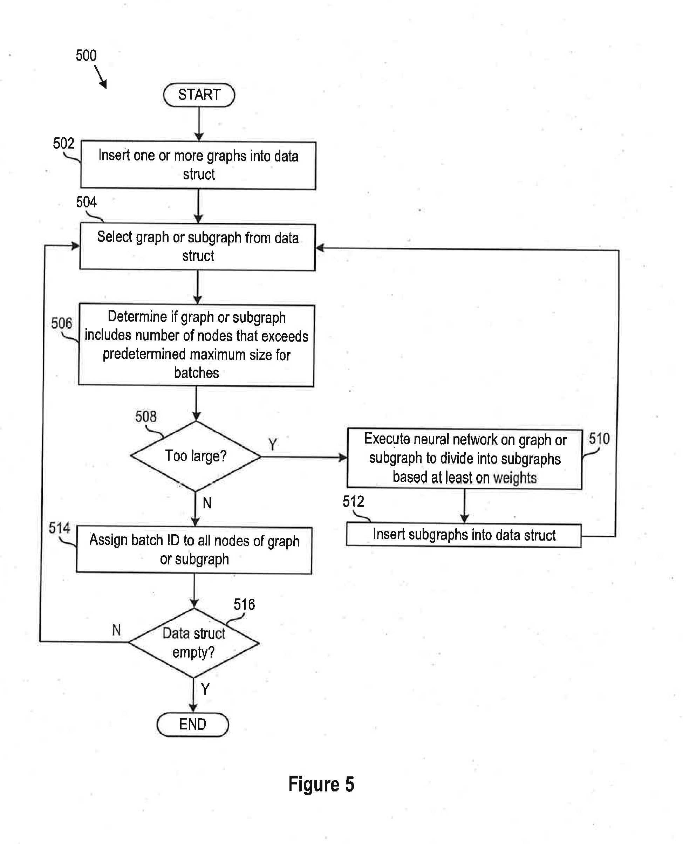

At step 408, batch service 140 executes neural network 142 based on the graph(s) to generate subgraphs based at least on the edge weights, as discussed further below in conjunction with Figure 5. It should be noted that some graphs generated at step 406 may already be . sufficiently small for VMs corresponding to the nodes to be migrated as a single batch. Such graphs may not be divided into subgraphs. Other graphs generated at step 406 may be too large for VMs corresponding to the nodes to be migrated as a single batch. Such graphs may be divided into subgraphs. Any graphs and subgraphs remaining after step 408 are referred to herein as the "final graphs and subgraphs."

At step 410, hosts 160 transfer subsets of VMs 172 across computing environments, e.g., from computing environment 100 to computing environment 200. Hosts 160 transfer the subsets in batches according to the final graph and subgraphs. Nodes in the same graph or same subgraph are migrated together as a group, e.g., in parallel. For example, host 110 may automatically instruct hosts 160 to migrate the batches, one at a time. As another example, host 110 may display information indicating the different groups to an administrator of computing environment 100. The administrator may then schedule the migration of VMs 172 according to the final graph and subgraphs. The administrator may further make any desired changes, e.g., moving one of VMs 172 from one of the groups to another one of the groups, as desired.

For example, as discussed above in conjunction with Figure 2, hosts 160 may perform migrations of VMs 172 with hosts of computing environment 200 using migrate modules of the hosts. In such example, migrate modules of hosts 160 may act as migration sources, and the migrate modules of the hosts of computing environment 200 may act as migration destinations. After step 410, method 400 ends. It should be noted that although method 400 is discussed with respect to migrating VMs 172 from computing environment 100 to computing environment 200, method 400 may similarly be performed, e.g., to migrate VMs 222 from computing environment 200 to computing environment 100.

Figure 5 is a flow diagram of a method 500 that may be performed by host 110 to execute neural network 142 to divide graphs into subgraphs, according to some embodiments. At step 502, batch service 140 inserts one or more graphs into a data structure such as a queue. A queue is a linear data structure that stores elements in a first-in, first-out (FIFO) order, elements being inserted at the rear of the queue, referred to as the tail, and removed from the front of the queue, referred to as the head. At step 504, batch service 140 selects a graph or subgraph from the data structure, e.g., from the head thereof in the case of a queue. Thus far, batch service 140 has only been described as having inserted one or more graphs in the data structure. However, batch service 140 may also insert subgraphs while performing method 500, as discussed further below.

At step 506, batch service 140 determines if the selected graph or subgraph includes a number of nodes that exceeds a predetermined maximum size for batches. For example, such maximum size may have been set by an administrator of computing environment 100 based on the bandwidth of the connection between computing environment 100 and computing environment 200. Such maximum size may have further been set based on other factors such as processing and memory constraints of hosts performing the migrations. For example, the maximum size may be a number of VMs such as 10 VMs, and batch service 140 may directly compare the number of nodes of the selected graph or subgraph to the maximum size.

At step 508, if the graph or subgraph exceeds the maximum size, method 500 moves to step 510. At step 510, batch service 140 executes neural network 142 on the graph or subgraph to divide it into subgraphs based at least on weights. In the case of a subgraph being used as the input to neural network 142, batch service 140 executes neural network 142 to divide the subgraph into smaller subgraphs. As discussed above, neural network 142 may perform such partitioning based on a clustering algorithm or a community detection algorithm.

At step 512, batch service 140 inserts the subgraphs generated by neural network 142 into the data structure, e.g., at the tail thereof in the case of a queue. Method 500 then returns to step 504, and batch service 140 selects another graph or subgraph from the data structure, e.g., from the head thereof in the case of a queue. At step 508, if a selected graph or subgraph does not exceed the maximum size for batches, method 500 moves to step 514.

At step 514, batch service 110 may assign a batch identifier (ID) to all the nodes of a selected graph or subgraph. In particular, batch service 110 may store the same batch ID in association with each node so that it may be determined later that each node has been assigned to the same group for migration. Host 110 may refer to the batch IDs to automatically determine the different groups for migrating batches or for displaying information indicating different groups to an administrator of computing environment 100. At step 516, if there is another graph or subgraph in the data structure, method 500 returns to step 504, and batch service 110 selects another graph or subgraph from the data structure. Otherwise, at step 516, if the data structure is empty, method 500 ends.

It should be noted that in some cases, batch service 140 may execute neural network 142 multiple times to divide a single graph. For example, batch service 140 may perform a first iteration of executing neural network 142 based on the graph, resulting in two or more subgraphs, any of which may still include a number of nodes that exceeds the maximum size. Batch service 140 may then perform a second iteration of executing neural network 142 based on such a subgraph, resulting in two or more smaller subgraphs. Indeed, batch service 140 may execute neural network 142 any number of times to divide graphs into sufficiently small subgraphs.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Virtualized systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data. Many variations, additions, and improvements are possible, regardless of the degree of virtualization. The virtualization software can therefore include components of a host, console, or guest operating system (OS) that perform virtualization functions.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

## Claims

1. A computer system including one or more computers that include one or more processors and memory, wherein the one or more processors execute instructions stored in the memory to migrate a plurality of workloads from a first computing environment to a second computing environment, by performing the following steps:
collecting network traffic data associated with network traffic flows between pairs of workloads within the plurality of workloads;
generating a first graph data structure including a plurality of first nodes corresponding respectively to at least a first subset of the plurality of workloads, and further including edges connecting pairs of first nodes within the plurality of first nodes;
assigning weights to the edges of the first graph data structure based at least on the network traffic data;
executing a neural network to divide the first graph data structure into a plurality of first subgraph data structures, the neural network generating the first subgraph data structures based at least on the weights assigned to the edges of the first graph data structure; and
transferring the first subset of the plurality of workloads from the first computing environment to the second computing environment in a plurality of first batches according to the first subgraph data structures, workloads transferred in each of the first batches corresponding respectively to first nodes of one of the first subgraph data structures.

2. The computer system of claim 1, wherein the steps further comprise:
generating a second graph data structure including a plurality of second nodes corresponding respectively to a second subset of the plurality of workloads, and further including edges connecting pairs of second nodes within the plurality of second nodes, and assigning weights to the edges of the second graph data structure based at least on the network traffic data;
executing the neural network to divide the second graph data structure into a plurality of second subgraph data structures, the neural network generating the second subgraph data structures based at least on the weights assigned to the edges of the second graph data structure; and
transferring the second subset of the plurality of workloads from the first computing environment to the second computing environment in a plurality of second batches according to the second subgraph data structures, workloads transferred in each of the second batches corresponding respectively to second nodes of one of the second subgraph data structures.

3. The computer system of claim 1 or 2, wherein dividing the first graph data structure into the plurality of first subgraph data structures comprises:
executing the neural network a plurality of times, the first graph data structure being input to the neural network during a first iteration of the neural network, the neural network generating a plurality of output subgraph data structures based on the first graph data structure, and one of the output subgraph data structures being input to the neural network during a second iteration of the neural network.

4. The computer system of claim 3, wherein the steps further comprise:
determining that the one of the output subgraph data structures includes a number of nodes that exceeds a predetermined maximum size for the first batches.

5. The computer system of any preceding claim, wherein the steps further comprise:
determining, based on the network traffic data, measures of network traffic between the pairs of workloads within the plurality of workloads, the weights of the first graph data structure being assigned based on the measures of network traffic.

6. The computer system of any preceding claim, wherein applications are executed by the plurality of workloads, and the steps further comprise:
collecting application data associating workloads within the plurality of workloads with the plurality of applications, the weights being assigned to the edges of the first graph data structure further based on the application data.

7. The computer system of any preceding claim, wherein transferring the plurality of workloads comprises transferring workloads that are in the same ones of the first batches in parallel.

8. A method of migrating a plurality of workloads from a first computing environment to a second computing environment, the method comprising:
collecting network traffic data associated with network traffic flows between pairs of workloads within the plurality of workloads;
generating a first graph data structure including a plurality of first nodes corresponding respectively to at least a first subset of the plurality of workloads, and further including edges connecting pairs of first nodes within the plurality of first nodes;
assigning weights to the edges of the first graph data structure based at least on the network traffic data;
executing a neural network to divide the first graph data structure into a plurality of first subgraph data structures, wherein the neural network generates the first subgraph data structures based at least on the weights assigned to the edges of the first graph data structure; and
transferring the first subset of the plurality of workloads from the first computing environment to the second computing environment in a plurality of first batches according to the first subgraph data structures, wherein workloads transferred in each of the first batches correspond respectively to first nodes of one of the first subgraph data structures.

9. The method of claim 8, further comprising:
generating a second graph data structure including a plurality of second nodes corresponding respectively to a second subset of the plurality of workloads, and further including edges connecting pairs of second nodes within the plurality of second nodes, and assigning weights to the edges of the second graph data structure based at least on the network traffic data;
executing the neural network to divide the second graph data structure into a plurality of second subgraph data structures, wherein the neural network generates the second subgraph data structures based at least on the weights assigned to the edges of the second graph data structure; and
transferring the second subset of the plurality of workloads from the first computing environment to the second computing environment in a plurality of second batches according to the second subgraph data structures, wherein workloads transferred in each of the second batches correspond respectively to second nodes of one of the second subgraph data structures.

10. The method of claim 8 or 9, wherein dividing the first graph data structure into the plurality of first subgraph data structures comprises:
executing the neural network a plurality of times, the first graph data structure being input to the neural network during a first iteration of the neural network, the neural network generating a plurality of output subgraph data structures based on the first graph data structure, and one of the output subgraph data structures being input to the neural network during a second iteration of the neural network.

11. The method of claim 10, further comprising:
determining that the one of the output subgraph data structures includes a number of nodes that exceeds a predetermined maximum size for the first batches.

12. The method of any preceding claim 8 to 11, further comprising:
determining, based on the network traffic data, measures of network traffic between the pairs of workloads within the plurality of workloads, the weights of the first graph data structure being assigned based on the measures of network traffic.

13. The method of any preceding claim 8 to 12, wherein applications are executed by the plurality of workloads, and the method further comprises:
collecting application data associating workloads within the plurality of workloads with the plurality of applications, the weights being assigned to the edges of the first graph data structure further based on the application data.

14. The method of any preceding claim 8 to 13, wherein transferring the plurality of workloads comprises transferring workloads that are in the same ones of the first batches in parallel.

15. One or more non-transitory, computer-readable media comprising instructions that are executable in a computer system, wherein the instructions when executed cause the computer system to carry out a method of migrating a plurality of workloads from a first computing environment to a second computing environment, and wherein the method comprises:
collecting network traffic data associated with network traffic flows between pairs of workloads within the plurality of workloads;
generating a first graph data structure including a plurality of first nodes corresponding respectively to at least a first subset of the plurality of workloads, and further including edges connecting pairs of first nodes within the plurality of first nodes;
assigning weights to the edges of the first graph data structure based at least on the network traffic data;
executing a neural network to divide the first graph data structure into a plurality of first subgraph data structures, the neural network generating the first subgraph data structures based at least on the weights assigned to the edges of the first graph data structure; and
transferring the first subset of the plurality of workloads from the first computing environment to the second computing environment in a plurality of first batches according to the first subgraph data structures, workloads transferred in each of the first batches corresponding respectively to first nodes of one of the first subgraph data structures.
